# EUROPEAN PATENT APPLICATION

(11) **EP 1 952 977 A2**
(43) Date of publication of application: **06.08.2008**
(21) Application number: 08100362.6
(22) Date of filing: 11.01.2008
(51) Int. Cl.: B32B 15/01, A47G 19/12

(54) **New container for liquid products**

(30) Priority: 12.01.2007 IT PD20070011
(71) Applicant: Bragagnolo Argenti Snc, 35013 Cittadella (PD) (IT)
(72) Inventor: Giuriati, Vittorio, 35013 Cittadella (PD) (IT); Bragagnolo, Gino, 35013 Cittadella (PD) (IT); Bragagnolo, Antonio, 35013 Cittadella (PD) (IT)
(74) Representative: Vinci, Marcello

(57) **Abstract**

The invention is a new container, glass, jug, cup, carafe, vase in general, for liquids, both liquid foods and other types of liquid, entirely or partially made from a multilayer laminate metallic material comprising at least one copper foil interposed between at least two layers in silver 999, and wherein the whole or part of the surface in silver 999 is the surface in contact with the liquid contained therein.

## Description

The present invention concerns containers, in particular containers for liquids, like plateware in general, glasses, vases, cups, jugs, carafes, and in particular it concerns a new type of container for liquids made of a stainless multilayer laminate metallic material with antibacterial properties.

Containers for liquids, both liquid foods and other types of liquid, are known, like glasses, cups, jugs, carafes, vases and plateware in general, all made from common materials, such as plastic, and from more valuable and resistant materials, such as glass, baked clay and above all silver.

In fact, the use of silver is known, specifically treated and processed with other metals, typically copper, to obtain alloys not only for making vases and containers in general, but also for making various types of objects, jewels, frames, cutlery, etc.

Silver and copper alloys are currently used to make these and other types of objects, which are more or less valuable according to the quantity of silver contained therein.

For example, objects made from silver 800 alloys are widespread, said alloys containing at least 800 parts per thousand of pure silver and 200 parts per thousand of copper.

Alloys with a higher silver content are also known, for example silver 925, made up of 925 parts per thousand of silver and the remaining parts of copper.

Several processing methods for making objects in silver alloys are known, which are intended to achieve the hot or cold deformation of the material used.

In particular, the roller levelling process is known, which substantially consists in the hot deformation of sheets with rollers or cylinders.

Cold bending, drawing, stamping processes are also known, that is, processes for the cold deformation of sheets aimed at obtaining various shapes, even concave and/or convex.

The objects and containers made of silver are extremely valuable and much appreciated. However, it is known that silver alloy objects tend to darken very easily if exposed to air, and thus to look "old" and unpleasant with age. For this reason, it is necessary to periodically clean and polish the objects made from silver alloys, which requires much time and care.

For this reason, nowadays objects made from silver alloys are becoming less widespread than in the past, since other materials that offer high resistance and long-lasting shine are preferred.

To overcome all the drawbacks described above, a new type of container, in particular for liquids, has been designed and constructed, which is made of a multilayer laminate metallic material comprising silver 999 that therefore is stainless and has antibacterial properties.

Pure silver, commonly defined silver 999 in order to take in consideration the inevitable presence of impurities in the metal, is white and shiny and is characterized by high malleability and ductility.

For this reason at present it is not possible to use only silver 999 to make objects like vases, cups, glasses, and so on, as these objects wouldn't be rigid enough and couldn't be effectively used for containing liquids.

The germicidal and antibacterial properties of pure silver are also known:
according to recent research, pure silver can oxidize microorganisms and bacteria by contact, thus killing them.

The main object of the present invention is to guarantee optimal rigidity, thanks to the presence of a stiffening copper core, as well as long-lasting shine, since the surface in contact with the air is made of silver 999 and is therefore stainless.

Consequently, a further important advantage of the invention lies in that it does not require complex and long cleaning and polishing operations.

The present invention can thus be usefully and effectively employed for containing liquids, either food liquids like drinking water, wine or other beverages, or not, since the surface in contact with the liquids is coated with a thin layer of silver 999, i.e. pure silver, which has considerable antibacterial properties.

This hinders the proliferation of bacteria in the water stored in the container, while at the same time reducing the concentration of bacteria.

These and others direct and complementary objects are achieved by the new container, in particular a container for liquids, for example a glass, jug, carafe, cup or vase in general, either for food liquids or other types of liquid, made from a multilayer laminate metallic material, stainless and with antibacterial properties, comprising at least one copper core interposed between at least two layers of silver 999, i.e. pure silver.

In the preferred embodiment of the invention, the multilayer material is achieved by roller levelling the multilayer metallic sheet made up of silver 999 - copper -silver 999, which is therefore cold deformed to obtain the desired curvature or shape of the object and then welded.

The bottom or other finishing parts, such as handles or other details, are then welded to the product obtained.

According to the invention, a further finishing stage can be included, consisting of a plating bath suited to deposit a further thin layer of silver 999 on the whole or part of the inner and/or outer surface of the object.

As an alternative to or in combination with the roller levelling process, the silver 999 - copper - silver 999 sheets can be drawn and/or bent and/or stamped.

The new container, characterized by high stiffness thanks to the presence of the inner copper core, can be usefully employed to store liquids, even liquid foods.

The inner surface of the container, in fact, being completely made of silver 999, has optimal characteristis that enable it to remain in contact with liquid substances even for a long time, since silver 999 has an antibacterial and germicidal effect, and thus kills microorganisms through oxidation by contact.

Furthermore, the effectiveness of this antibacterial action remains constant over time.

The materials commonly used for making containers for food, like silver alloys and, even more, materials like glass, plastic, baked clay, and so on, don't have this antibacterial effect.

Research carried out on water samples stored for 24 hours in glass containers, for example, showed that very common and potentially pathogenic bacteria, like Enterococcus and Escherichia coli, proliferate in the water kept inside the container and that their estimated average concentration increases even by 10%.

On the contrary, research carried out on the same water samples, this time stored for 24 hours in the new containers made from multilayer laminate metallic material, showed a considerable reduction in the presence of both types of bacteria, in particular of Escherichia coli that resulted to be absent from the analyzed sample.

Further analyses carried out on these samples also showed a minimum release of silver and copper ions, below the limits established by law, and therefore in a quantity that is not dangerous for the health but in any case is sufficient for an effective antibacterial action.

The new invention can be usefully employed even to contain flowers or plants and the water necessary to keep them. The antibacterial effect of the surface in silver 999, in fact, hinders the proliferation of bacteria and slows down the water decomposition process due to the rotting of plant substances in water.

The layer of silver 999 inside the container and in contact with water develops a bactericidal action to the benefit of water quality, thus lengthening change intervals and limiting the appearance of unpleasant smells.

Besides, silver 999, that is, pure silver, doesn't become black, and offers long-lasting shine, differently from silver alloys (800 parts per thousand, 925 parts per thousand, and son on) that when in contact with the air darken very quickly.

## Claims

1. New container, glass, jug, cup, carafe, vase in general, for liquids, both liquid foods and other types of liquid, **characterized in that** it is entirely or partially made of a multilayer laminate metallic material comprising at least one copper foil interposed between at least two layers in silver 999, and wherein the whole or part of the surface in silver 999 is the surface in contact with the liquid contained therein.

2. New container according to claim 1, **characterized in that** it comprises side walls made from said multilayer laminate metallic material and wherein said multilayer sheet made up of silver 999 - copper - silver 999 is:
- shaped by roller levelling and/or bending;
- welded in such a way as to define a space that is at least partially closed at the sides;
- welded to a bottom entirely or partially made from said multilayer laminate metallic material.

3. New container according to claim 1, **characterized in that** it comprises side walls and/or a bottom made from said multilayer laminate metallic material, and wherein said multilayer sheet made up of silver 999 - copper - silver 999 is shaped by drawing and/or stamping.

4. New container according to one or more of the preceding claims, **characterized in that** said laminate metallic material is entirely or partially coated with a further finishing layer of silver 999 obtained through a plating bath.
